# EUROPEAN PATENT SPECIFICATION

(11) **EP 0 316 417 B1**
(45) Date of publication and mention of the grant of the patent: **08.05.1996**
(21) Application number: 88905005.0
(22) Date of filing: 26.05.1988
(51) Int. Cl.: F16D 1/06, B25B 13/48

(54) **A FASTENING DEVICE**
BEFESTIGUNGSVORRICHTUNG
DISPOSITIF DE JOINTURE

(30) Priority: 27.05.1987 NO 872219; 08.09.1987 NO 873742; 08.09.1987 NO 873743; 03.12.1987 NO 875052
(43) Date of publication of application: 24.05.1989
(60) Divisional application: 95117310.3
(73) Proprietor: KOLVEREID, Harald, N-8610 Grubhei (NO)
(72) Inventor: KOLVEREID, Harald, N-8610 Grubhei (NO)
(74) Representative: Axelsson, Rolf
(86) International application number: NO8800045
(87) International publication number: WO8809444

(56) References cited:
- EP-A- 0 210 771
- DE-A- 2 230 670
- DK-A- 0 046 622
- FR-A- 2 495 527
- GB-A- 1 608
- GB-A- 30 570
- NO-A- 0 051 592
- SE-A- 0 079 416
- SE-B- 0 443 419
- US-A- 2 434 152
- US-A- 2 461 680
- US-A- 2 930 642
- US-A- 3 129 038

## Description

### A FASTENING DEVICE

The present invention relates to a self-contained fastening device to be located between machine elements.

Dependent on its utilization, a fixing device may in one embodiment comprise a clamping sleeve for fixing cog wheels, coupling halves, inner rings of roller bearings, and the like on shafts, for joining shafts or pipes, connecting pipes in T-joints, attaching a tool to a machine, etc., and may, in a second embodiment comprise a nut for use on a non-threaded bolt.

The methods most well-known today for fixing wheels, coupling halves, and the like on shafts comprise use of keys, adapters, like "Taper Locks", and shrinking. The first mentioned method is labor consuming, requires cutting wedge-shaped grooves in the shaft as well as in the wheel, whereas the second requires much space as well as being labor consuming, although it is a simple method in case of replacement or maintenance. The third method mentioned above, i.e. shrinking, is the method requiring least space. On the other hand, this method demands great accuracy in processing as well as special procedures, like heating/cooling-in connection with mounting operations which are, thus, typically carried out in a workshop.

Screw and nut are well-known fixing devices and are widely used in present technical equipment, but nut and threads also have other uses than this conventional one, e.g. a nut may be used for locking a roller bearing on a shaft.

When the mentioned fixing devices are secured it is important to ensure clamping in a controlled and reliable manner. A clamping sleeve used as a structural member represents a novelty. Practical tests, however, showed that a conventional hexagonal design of nuts provides an unsuitable wrench mount for sleeves, and the same is the case for hook wrenches. Such wrench mounts require too much axial space and/or too much thickness of sleeve material to be useful in practical cases.

It was, thus, necessary to develop new kinds of fastening devices which are especially useful for thin sleeves, like the clamping sleeve mentioned above, but also for the kind of nuts comprised by the present invention.

In the patent literature there has been proposed a variety of fastening devices for different purposes.

US patent 3.129.038 discloses a device comprising an outer sleeve without any slot and an inner sleeve having a longitudinal slot. In this prior art device, the outer surface of the outer sleeve is designed as an inner ring of a ball bearing and is thus not to expand. Further, the prior art device is designed to have a close fit and not exposed to substantial forces in an axial direction. It is therefore not suited for the fastening of two mechnical parts, e.g. a drive shaft and a wheel hub, nor suited to act as a threadless nut on smooth shaft of circular cross section.

Norwegian patent 51592 relates to the mounting of a hub to a shaft, the hub being provided with internal and the shaft being provided with external threads of a special shape which fit together. Further, the Norwegian patent discloses an embodiment having a smooth hub and smooth shaft, and a fastening device with inner and outer sleeve means as well as stop rings. Thus, the fastening means of this patent consists of a total of seven elements.

EP-A-0 210 771 describes a drilling rod stabilizer for, use in a drilling hole and is not adapted for connecting pipes.

The characterisic features of the fastening device of the present invention are stated in the appended claims.
- Figures 1a and 1b: illustrate the components of a clamping sleeve comprising an outer and an inner sleeve member,
- Figure 2: shows the outer sleeve and inner sleeve members according to Figure 1 in a coupled state and surrounding a shaft,
- Figure 3a and 3b: shows a variant of the embodiment of Figure 1 with an outer and an inner locking sleeve member,
- Figure 4: illustrates the clamping sleeve according to Figures 3a and 3b in an assembled state and surrounding a shaft,
- Figures 5a and 5b: illustrate the components of a connecting coupling, and Figure 6 shows the connecting coupling in an assembled state surrounding two pipe ends,
- Figures 7a and 7b: show a variant of the embodiments shown in Figures 5a, and 5b, respectively,
- Figure 8: shows the connecting coupling of Figure 7 in an assembled state surrounding two pipe ends,
- Figures 9a and 9b: show an outer sleeve, and an inner sleeve, respectively, for a nut for use on a bolt without threads,
- Figures 10 and 11: show the outer portion of the nut engaged with its inner portion before, and after tightening, respectively,
- Figures 12a, 12b: illustrate a clamping sleeve with a wrench mount, illustrating a variant of the embodiment of Figure 1,
- Figure 13: illustrates the clamping sleeve mounted on the shaft of a wheel,
- Figure 14: is a sectional view XIV-XIV of Figure 13,
- Figures 15 and 16: show a securing tool in the shape of a lever engaged before, and after, resp., mutually turning outer and inner sleeve 1/7 revolution,
- Figure 17: illustrates an alternative securing mechanism utilizing two socket spanners,
- Figures 18 and 19: show a front elevation, and a perspective view, respectively, of a modified securing tool for tightening the clamping sleeve as shown in Figures 12-14,
- Figures 20 and 21: show a partly cut away side elevation, and a plan view, respectively, of a modification of the embodiment of Figures 18 and 19.

Figure 22 illustrates releasing means for heavy duty sleeves. The clamping sleeve, inter alia, shown in Figures 1-5, will simplify operations when a wheel is mounted on a shaft, since it will suffice to turn shaft and hole in the wheel hub roughly, requirements of tolerances are moderate, and rough turned surfaces provide a good hold, at the same time as mounting operations are very simple and may, thus, be carried out at the location where the equipment is, i.e. on the workshop floor or on the working site.

The sleeve with cylindrical threads is advantageous in relation to various concepts based on a cone, in that there is no relative axial movement between sleeve, shaft and wheel during tightening operations.

It should also be mentioned that the sleeve requires very little space radially as well as axially. If desired, a simple approach may be chosen with the handles of securing tools projecting only on one side of the wheel hub or bearing.

In use, a single-acting sleeve has a unique function. If it is correctly mounted it will cause the wheel, coupling, or whatever is mounted on the shaft to spin free when the shaft is subjected to a shock load in one sense of rotation. A shock load in the other direction will cause the wheel to spin more firmly onto the shaft or the shaft to break. If the wheel is mounted on two clamping sleeves having a width of half the hub, with one sleeve mounted on each side, shock loads will cause increased tightening of the sleeve on one or the other side, independent of the sense of rotation, alternatively to shaft fracture.

When a central clamping sleeve is used with an outer and an inner locking sleeve, it will be possible, when the design is correct, to make the wheel spin free in case of a shock load, independent of the sense of rotation.

Above examples of the performance of the coupling illustrate the special characteristics of the device. If the device is used on other rotating machine elements, e.g. couplings, outer and inner rings for roller/ball bearings, etc., unique advantages are achieved in these areas as well, as compared to conventional methods.

Connecting pipes or mounting pipes to various adapter members now often requires expensive and time consuming working of the pipe ends by providing threads and/or soldering/ welding. For connecting high pressure pipes,fittings are used which are labor consuming in production due to the number of members in each joint as well as exacting demands on precision.

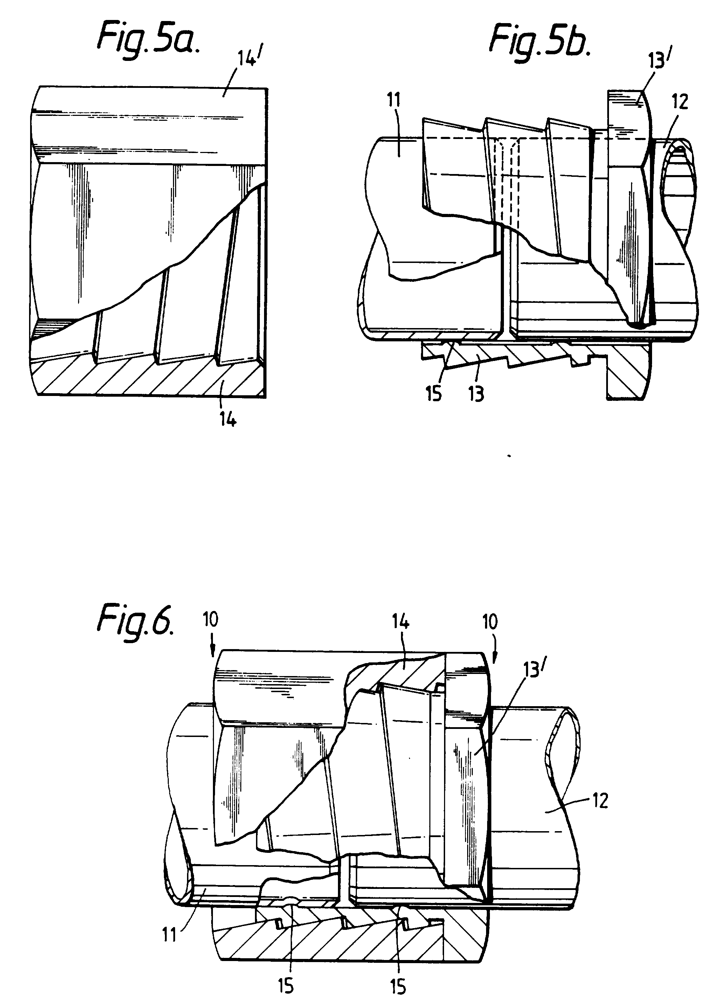

When the clamping sleeve principle is used on pipe fittings as indicated in Figures 5 and 6, and Figures 7 and 8, implementation involves few members, and at the same time, processing is simple in manufacture of the members because of moderate demands on tolerances. Work in connection with mounting pipes, especially hydraulic equipment, is considerably simplified by use of clamping sleeves, since use of special tools and preparation of pipe ends is rendered unnecessary.

A clamping sleeve may be repeatedly used on used or new pipes, and with the same good result.

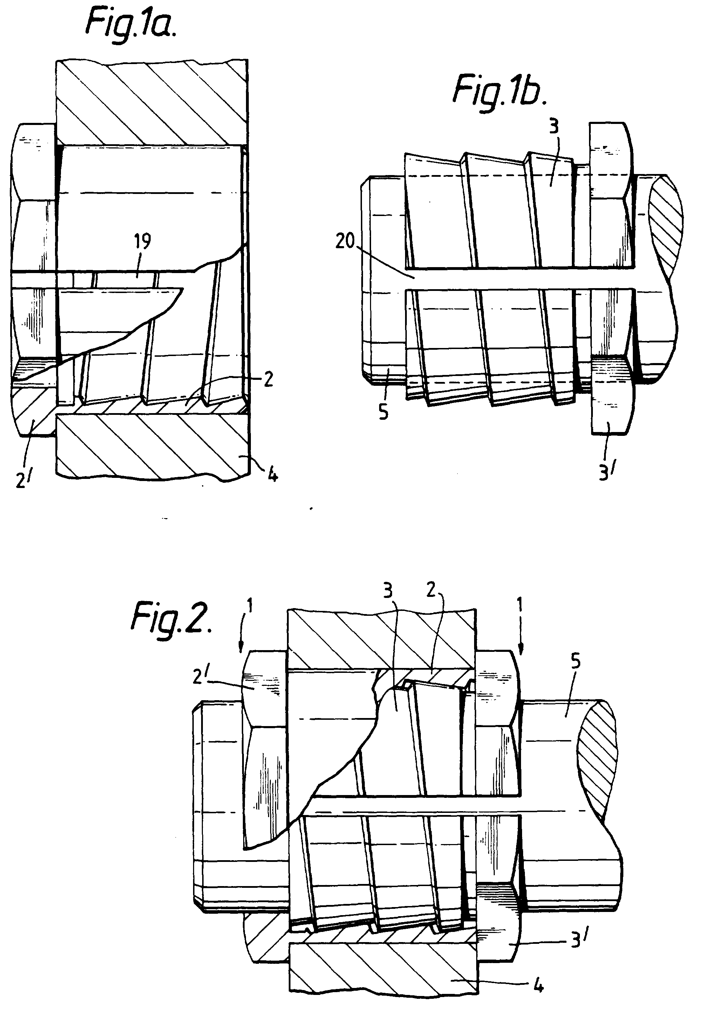

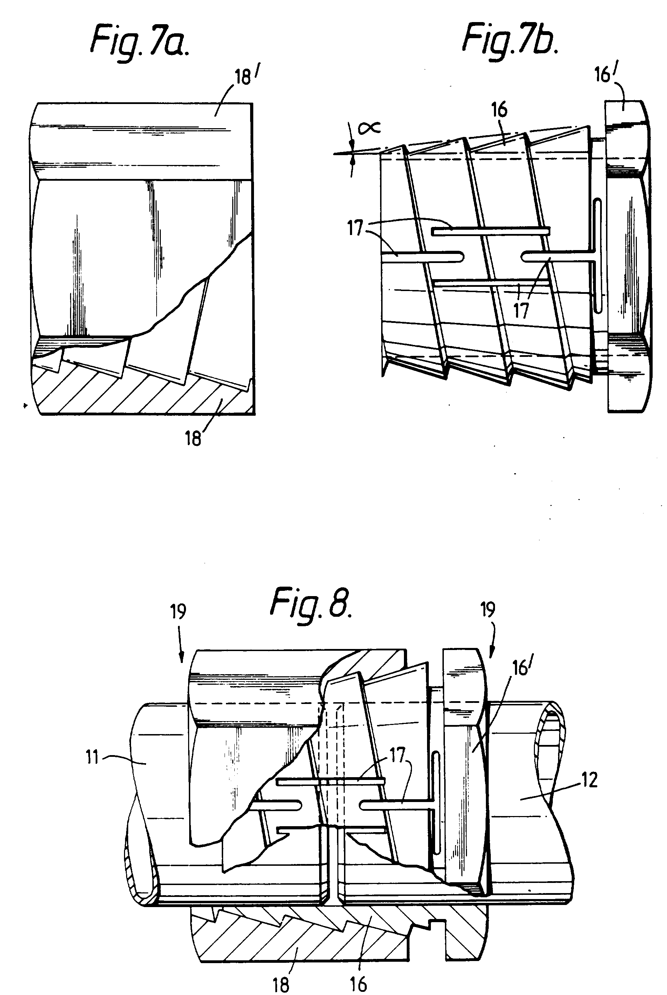

As shown in Figures 1 and 2, a first embodiment of the clamping unit 1 comprises an outer sleeve 2 and an inner sleeve 3. Each sleeve has a special thread, the outer sleeve having an internal thread and the inner sleeve an external thread the shape of which ensure that when sleeves are pushed/ screwed together to stop and tightening is continued, instead of a high axial and a low radial component force, as in case of standard threads, the opposite is achieved here, i.e. a high radial and a low axial component. The thread is normally cylindrical, as shown in Figures 1-6, but it may be conical (cf. Figures 7-11), inter alia to compensate for tolerance during tightening, or to seal off the thread in an axial direction.

Figure la shows outer sleeve 2 provided in a wheel-hub 4, and Figure 1b shows inner sleeve 3 provided on a shaft 5. In Figure 2 clamping sleeve 1 is illustrated with wheel-hub 4 clamped onto said axle 5. In Figure 2 the wrench mounts on sleeves 2 and 3, respectively, are indicated by 2' and 3', respectively. The play between the thread flanks not exposed to pressure during tightening will appear from Figure 2. Also, it will appear from Figures 1a and 1b, as well as Figure 2, that the profile of threads has a saw-tooth like shape with the pitch of tooth being less steep than its fall, e.g. as seen in Figure 1b with reference to the uppermost profile.

Operations are as follows when coupling a wheel to a shaft 5 Outer or locking sleeve 2 is mounted in the wheel hub and inner or locking sleeve 3 is pushed/screwed into sleeve 2 to stop. Shaft5 is now inserted into sleeve 3 and wheel 4 is positioned as desired. Mounting operations are continued by screwing sleeve 3 into sleeve 2, outer sleeve 2 expanding until butting against hub 4, and inner sleeve 3 shrinking to hold the shaft 5. Mutual pressure will arise to lock the wheel onto the shaft.

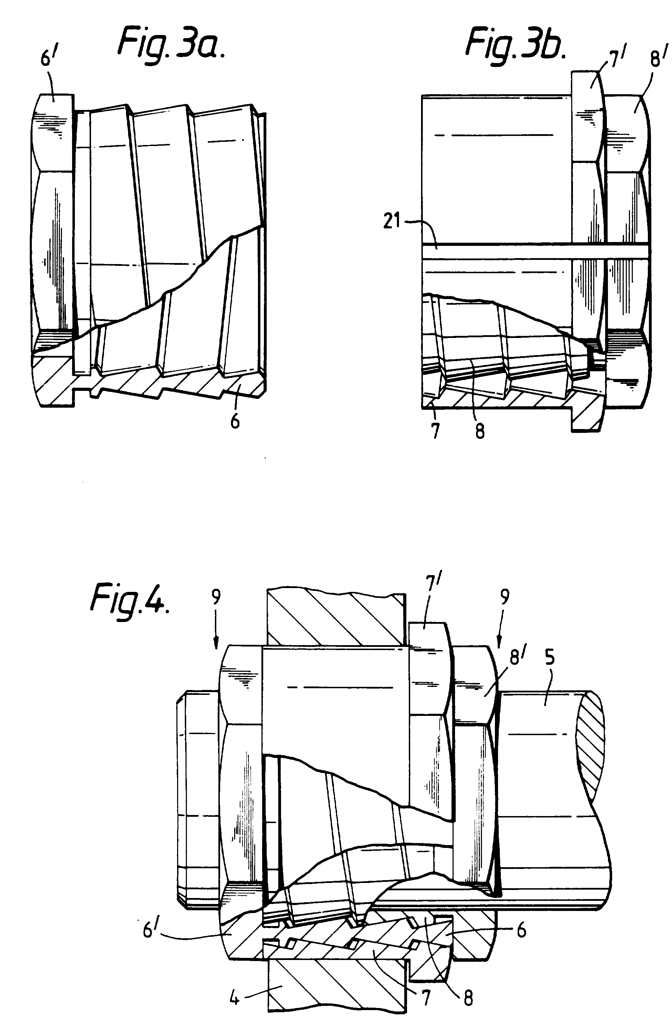

As will appear from, inter alia, Figures 3 and 4, the sleeves may be designed so as to have both wrench mounts 7',8' projecting on the same side of wheel-hub 4. As will appear best from Figure 4 and from Figures 3a and 3b showing the details, a central clamping sleeve 6 is used which has a wrench mount 6'. Central clamping sleeve 6 is engaged with an outer and an inner locking sleeve 7, and 8, respectively. Said cooperating sleeves will cause the wheel to spin free of the shaft dependent of the sense of rotation in case of a shock load.

In Figure 4 reference numeral 9 indicates the complete clamping device.

It will appear from Figures 3 and 4 that the thread profile is approximately corresponding to that of Figures 1 and 2. This is the case as regards the embodiment shown in Figures 5 and 6 as well. However, Figures 5 and 6 relate to a clamping sleeve 10 for connecting two pipe ends 11, 12. Pipe ends 11 and 12 are shown to be inserted in an inner sleeve 13 provided with a wrench mount 13'. In Figure 5a an outer or clamping sleeve 14 has a wrench mount 14' looking. rather like a nut. As compared with the solid design of clamping sleeve 14 locking sleeve 13 is thin and solid. Pipe ends 11, 12 are inserted in sleeve 13 which is provided with gasket rings or beads 15 against pipes. If sleeve 14 is pushed/ screwed onto sleeve 13 and tightened in relation to the latter and the pipes, sleeve 13 will be firmly clamped onto pipes 11, 12 and gasket rings or beads 15 will slightly deform pipes 11,12 providing further mutual attachment. This kind of coupling is, thus, also suitable for high pressure connections.

In case of clamping sleeves on pipes of a comparatively soft material, e.g. plastic or copper, clamping sleeve 13 may be thin-walled and of the same quality grade of material as the pipes, whereas clamping sleeve 14 is made thick-walled or, alternatively, of a stronger material. Connections of this kind will be suitable for pipes subjected to low pressures, e.g. water pipes, and the like.

Figures 7 and 8 show a conical inner or locking sleeve 16 with a wrench mount 16', and with a plurality of rows of parallel, and overlapping slots 17, and a corresponding clamping sleeve 18 having a wrench mount 18'. It will appear that the threads are reversed as compared to the threads of sleeve 14 in Figure 5a, and that the threads are conical, corresponding to locking sleeve 16 in Figure 7b. In Figure 8 the complete clamping sleeve is shown generally designated 19 and tightened on the conical thread to a stop, tightening being achieved between pipe ends 11, 12.

As mentioned, the thread, in this case, has a reversed shape as compared with the cylindircal version shown in Figure 5. The purpose of this design is to permit the nut to be pushed onto the double cone formed by the cone and flank angle of the thread to provide for a tight fit.

If a shape like that of the cylindrical thread is selected, the cone in the thread may be used to receive tolerances, whereas the flank angle provides clamping forces.

Conical threads-of fittings, for high pressure pipes, is more labor consuming than the cylindrical design mentioned above, since the manufacture of conical threads is more complicated, in addition to milling of slots.

A connection is achieved by inserting pipe ends 11 and 12 to the centre of locking sleeve 16 and in this position clamping sleeve 18 (which is already placed around pipe II) is screwed to stop onto the conical locking sleeve. When clamping sleeve 18 is tightened further against locking sleeve 16 a connection is achieved which is tight and resists great mechanical loads in the form of vibrations and pipe knocking.

In connection with the embodiments shown in Figures 1, 2, 3b, and 7,8 it should be mentioned that outer sleeve 2 in Figure 1a and inner sleeve 3 of Figure 1b have longitudinal slots 19, and 20, respectively, intended to render the sleeves more readily expandable in a radial direction. Consequently, the tolerances of the sleeves are not so critical as compared to requirements if there were a tight fit originally between the wheel hub 4 or shaft 5.

A corresponding concept is to be found in Figure 3b where both outer sleeve 7 and inner sleeve 8 are provided with a axial slot, generally designated 21. However, it will obviously be useless to provide intermediate sleeve 6 with such slots.

In the embodiment shown in Figure 5 there is no axial slot due to the fact that a relatively thin-walled inner sleeve is used with sealant beads or rings 15, and because a longitudinal slot would, in fact, prevent a liquid sealing.

In the embodiment shown in Figure 7b liquid sealing is achieved even though axial and substantially radial slots are used, there being no open connection between various slots. This will contribute to prevent any liquid communication between the slots. At the same time, when an inner sleeve 16 of comparatively thick material is used, radial deformation will still be possible to provide a clamping effect against pipe ends 11 and 12.

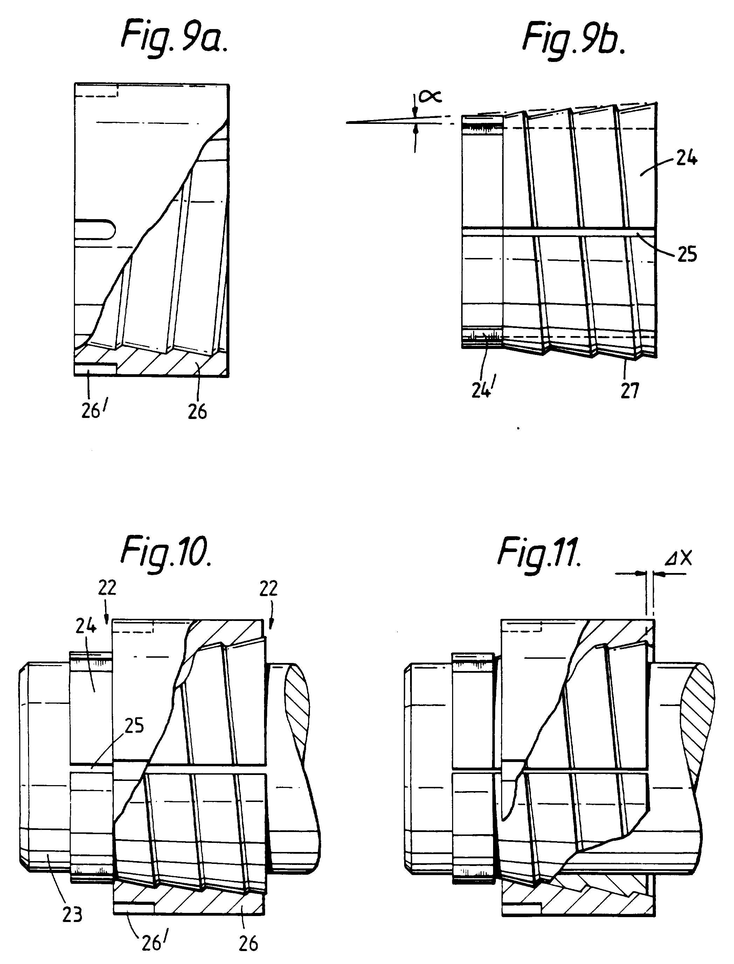

Figures 9a and 9b represent a variant of the concepts illustrated in the described Figures. This embodiment is especially intended for use as a nut on a bolt without threads.

In Figure 10 the thread-less nut has reference numeral 22. Nut 22 according to the invention is pushed onto a thread-less bolt 23 against an abutment and is then tightened. By tightening clamping force against the bolt is achieved simultaneously with thrust force on the abutment.

The nut comprises a thin-walled inner sleeve 24, cf. Figure 9b, which may be solid or may have a longitudinal slot 25, and which has specially designed conical threads on most of its periphery as well as a wrench mount 24', and a thick-walled outer sleeve 26-having internal threads which correspond to the treads of above mentioned member 24 and having a wrench mount 26' on its periphery.

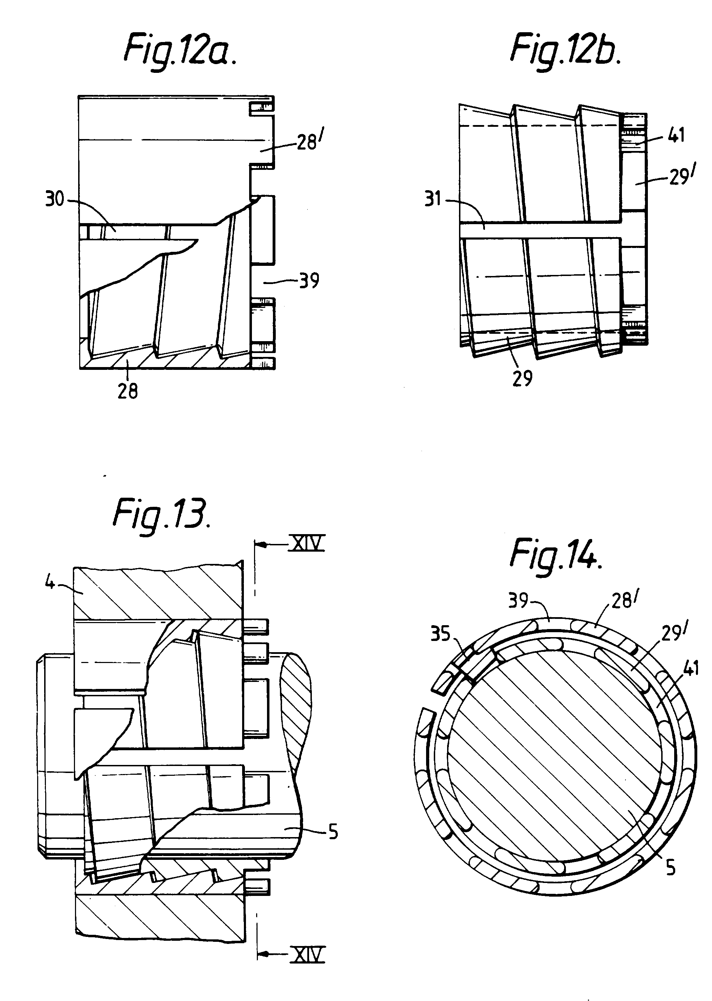

Reference numeral 27 indicates the thread showing a conicity of 2α. In Figure 10 the outer portion 26 of nut 22 is shown in engagement with inner sleeve 24 for tightening, and in Figure 11 said members are shown after tightening, whereas ΔX marks outer overhang of sleeve as compared to inner sleeve.

The nut shown in Figures 9, 10, and 11 will commonly be made of steel, but may obviously be produced of other materials, e.g. brass or plastic, dependent on its utilization and the forces involved.

When outer sleeve is tightened in relation to inner sleeve the thread cone will cause a clamping force against the bolt. In Figure 10 it is shown how the outer portion 26 of the nut is set up against inner member 24, and if the outer sleeve 26 is further rotated in the same manner relative to the inner sleeves, the last mentioned will, due to the thread-cone and the slot 25 in inner sleeve 24, be firmly clamped to bolt 23. Additional tightening will, thus, cause outer member 26 to overhang ΔX outside inner member, as will appear from Figure II. The mentioned effect may, thus, be utilized at the same time. to provide a hold on the bolt and pushing force against a stop as indicated by small arrows in Figure 11.

As mentioned above, the conventional design of clamping nuts provided certain drawbacks as regards fixing. A remedy for this circumstance is indicated in Figure 12, where it is intended to be able to rotate a sleeve by the aid of a new wrench mount with the second sleeve forming a counterhold, thus, to achieve great tightening moments by simple aids.

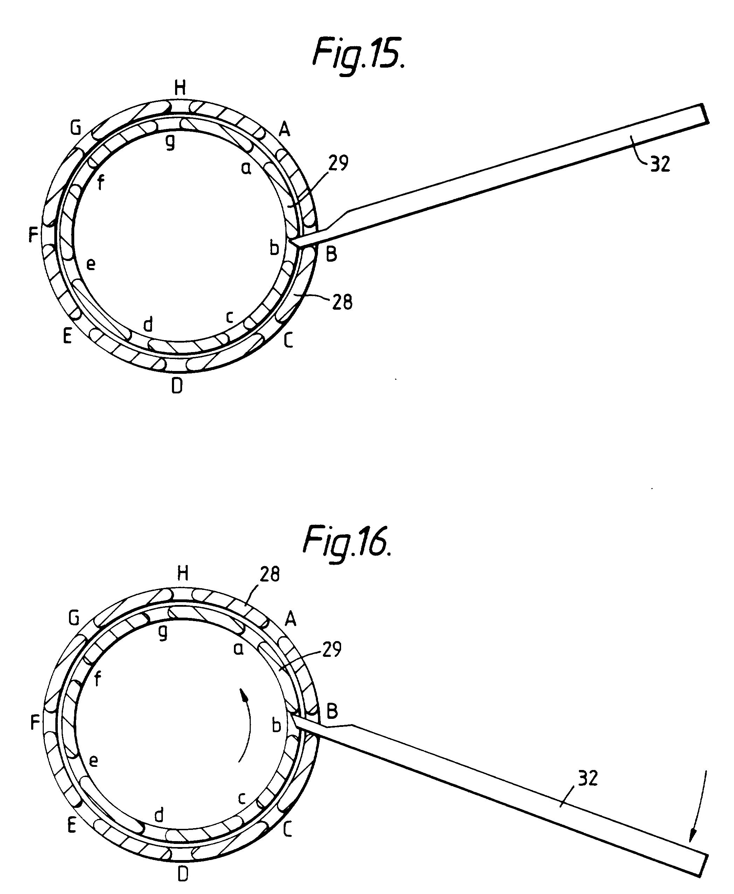

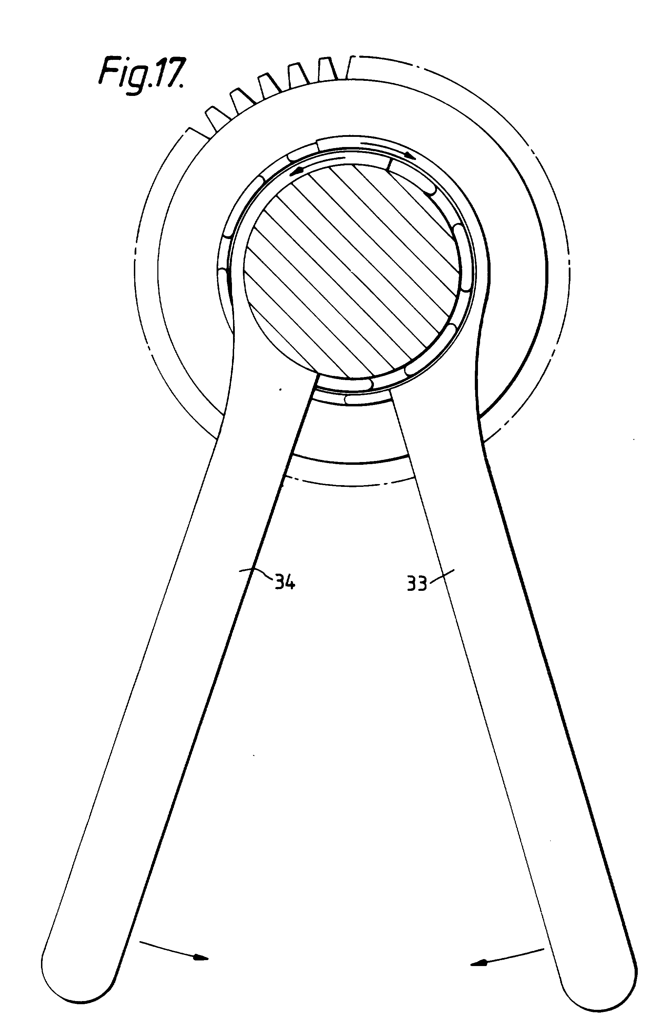

According to the invention the wrench mount is achieved by the aid of an outer sleeve 28 and an inner sleeve 29 in the shown embodiment, as shown in Figure, 12a, and 12b, respectively. Each sleeve is provided with a slot 30,31, respectively, and grip teeth 28' and 29', respectively. Outer sleeve 28 and inner sleeve 29 may have an equal or different number of teeth 28', 29', the number of teeth, inter alia, depending on the difference of sleeve diameter. If outer sleeve 28 and inner sleeve 29 have a different number of teeth/slots, one sleeve may be rotated relative to the other by the aid of a securing tool, e.g. a lever 32, as clearly seen in Figures 15 and 16. Alternatively, if tightening moments become large, it is possible to use spanners 33 and 34 for the outer, and inner sleeve, respectively (to avoid fracturing of the teeth). Such scanners will be adapted to the slots and teeth of the respective sleeves and may, e.g. extend over approximately half of the circumference of the sleeves, as indicated in Figure 17.

Figures 12a and 12b, as mentioned, show the outer sleeve 28 and inner sleeve 29, whereas Figure 13 shows an axle mounted in a wheel-hub 4, and Figure 14 shows a cross section of the wrench mount portion with said axle 5 being surrounded.

Figures 15 and 16 show how the bar is engaged with sleeves 28,29, before, and after one of the sleeves (29) is turned 1/7 of a revolution as compared to the other.

In order to mount wheels on shafts sleeve 28 is at first pushed/screwed to stop on sleeve 29. Then the combined sleeve 28,29 is pushed into the hub 4 and shaft 5 is inserted into sleeve/hub. After adjusting the wheel on its shaftthe sleeve is tightened by the aid of bar 32.

Operations for tightening sleeves by the aid of a bar 32 are as follows. In Figures 15 and 16 capital letters indicate the openings in outer sleeve 28, and small letters indicate the openings in inner sleeve 29. It will appear from Figure 15 that openings A,a are aligned, whereas openings B,b are slightly displaced relative to each other. Position B/b will, thus, form a starting point for placing a bar 32. When bar 32 is manipulated a position as shown in Figure 16 will occur, with openings B, b aligned, whereas openings C,c form a new starting point for placing the bar. By carrying on in this manner until totally 7 bar operations are carried out, opening b will be aligned with opening A, and outer sleeve 28 is now rotated in relation to inner sleeve 29 corresponding to a sector a b. These operations may continue until the desired torque is achieved by the aid of said tool. By providing bar 32 with a torque indicator it is possible to carry out a completely controlled tightening operation. In stead of utilizing a bar for tightening,socket spanners 33,34 may, alternatively, be used, as indicated in Figure 17. If it is desired to lock the sleeves mutually in addition to the locking effect provided by friction, a locking pin 35, as shown in Figure 14 may be mounted.

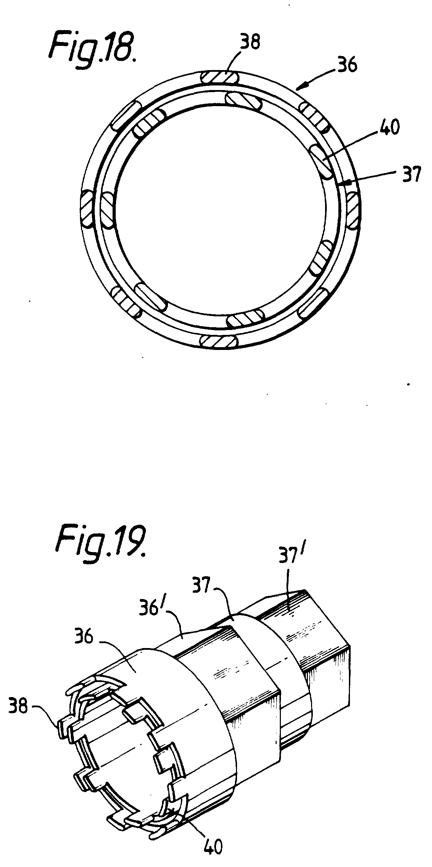

It might, however, be advantageous to use other kinds of securing tools, as illustrated in Figure 18. In this case, two substantially coaxial and mutually rotatable spanner means are used which comprise an outer socket spanner 36, having a wrench mount 36', and an inner socket spanner 37 having a wrench mount 37'. Outer wrench mount is provided with a row of teeth 38 intended for engagement with slots 39 between teeth 28, as shown in Figures 12a and 14. In the same manner inner socket spanner 37 is provided with a row or a ring of teeth 40 intended to engage in slots 41 between teeth 29', cf. Figure 12b and 14.

By using common socket spanners or mechanized, hydraulic, electric, or pneumatic wrenches which can engage wrench mounts 36'and 37', powerful tightening of the clamping nut shown in Figures 12-14, may be achieved in a simple manner. It will be obvious in this connection that by susbstituting conventional wrench mounts, as shown in some of the above described Figures, the securing tool shown in Figures 18 and 19 may readily be used for such devices. This fact is especially relevant in case it is suitable to operate a securing tool only from one side, as indicated in Figures 4 and 10, as well as in Figures 12-14.

It will be understood from the above that the fixing device according to the present invention may be used for a number of tasks, e.g. locking wheel-hubs and coupling halves onto shafts, connecting shafts, connecting pipes made of steel, other metals, plastic, etc. The sleeves according to the invention may be massive, but showing different strength as an alternative to being provided with the mentioned slots. By the aid of the non-threaded nut attachment fixing is achieved,in a most simple manner, due to the fact that both high axial and high radial force components are achieved. By using wrench mounts, as indicated in Figures 12-14, and in connection with fixing tools, as indicated in Figures 15-19, the torque exerted by the used tool will be evenly distributed at the same time as the teeth on inner and outer sleeve permit locking against unintentional rotation of one sleeve in relation to the other. If the number of teeth on inner and outer sleeve differ locking may be. achieved with very slight adjustments of the tightening moment.

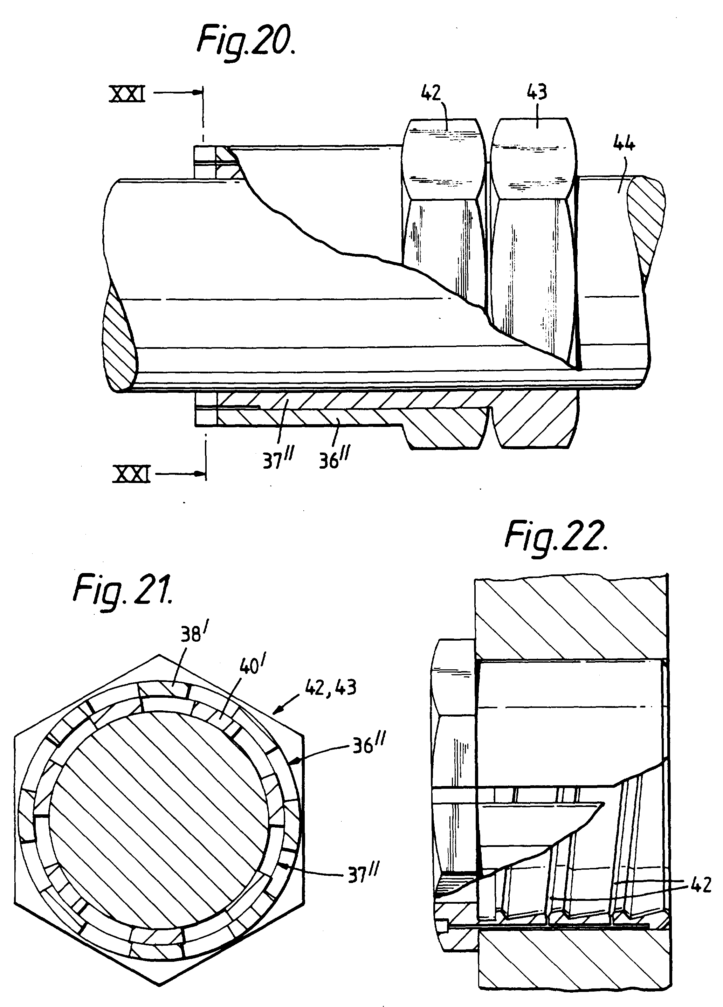

In Figures 20 and 21 a modification of the embodiment of Figures 18 and 19 is shown. Outer socket spanner 36" has a wrench mount 42 and inner socket spanner 37" has a wrench mount 43. Even though this is not to be considered as limiting the scope of the invention, wrench mounts 42 and 43 may have the same dimension. The performance is as disclosed in connection with Figures 18 and 19. Reference numeral 5 indicates a shaft, e.g. as shown in Figure 14.

In Figure 22, it is illustrated how heavy duty clamping sleeves can be released by introducing pressurized oil into grooves 42 on the threads of one or both of said sleeves, said grooves communicating with axially extending presurized oil inlets in said at least one sleeve.

## Claims

1. A self-contained fastening device to be located between machine elements, comprising:
one inner clamping sleeve member (8) having an external cylindrical thread with a sawtooth profile of a first relatively small flank angle on one side and a substantially larger flank angle on the other side,
an outer clamping sleeve member (7) having an internal thread matching the external thread of the inner clamping sleeve member, one sleeve member coaxially encompassing the other, and
a central clamping sleeve member (6) having internal and external threads cooperating with the external thread of the inner clamping sleeve member (8) and the internal thread of the outer clamping sleeve member (7), respectively, and being provided between the external thread of the inner clamping sleeve member and the internal thread of the outer clamping sleeve member,
wherein said inner and outer clamping sleeve members (8, 7) through mutual rotation and prevention of mutual axial motion by stop means being provided as double stop means (6') on said central clamping sleeve member (6), provide radial expansion of said outer sleeve member (7) to exert a pressure against an outer machine element (4) surrounding the outer clamping sleeve member and radial contraction of said inner sleeve member (8) to exert pressure on an inner machine element (5) surrounded by the inner clamping sleeve member and thereby radially two way and axial interlocking of said machine elements by frictional forces.

2. A device according to claim 1, wherein each of said inner and outer sleeve members (8, 7) has at least one axially extending through slot (21).

3. A device according to claim 2, further comprising:
wrench mounts (8'; 7') formed on the inner clamping sleeve member (8) and outer clamping member (7), which are adjacent when said sleeve members are cooperating with said central clamping sleeve (6), and a wrench mount (6') formed on said central clamping sleeve (6) extending a distance from said inner and outer clamping sleeve wrench mounts (8'; 7') approximately corresponding to the axial extent of threads of the respective inner and outer clamping sleeve members.

4. A device according to claim 1, further comprising:
wrench mounts formed on the inner clamping sleeve member (29) and outer clamping sleeve member (28), in the form of teeth (29'; 28') with slots (39, 41) extending between the teeth, which are adjacent when said sleeve members are. cooperating.

5. A self-contained fastening device to be located between machine elements, comprising:
one inner clamping sleeve member (29) having an external cylindrical thread with a sawtooth profile of a first relatively small flank angle on one side and a substantially larger flank angle on the other side,
an outer clamping sleeve member (28) having an internal thread matching the external thread of the inner clamping sleeve member, one sleeve member coaxially encompassing the other, and
wrench mounts on the inner and outer clamping sleeve members (29; 28) including teeth (28'; 29') with slots (39; 41) extending between said teeth,
wherein said wrench mounts of said inner and outer clamping sleeve members (29; 28) are provided on the same side of the device, and
wherein said inner and outer clamping sleeve members (29; 28) through mutual rotation and prevention of mutual axial motion by stop means provided on at least one of said inner sleeve member (29) and said outer sleeve member (28), provide radial expansion of said outer sleeve member to exert a pressure against an outer machine element (4) surrounding the outer clamping sleeve member (28) and radial contraction of said inner sleeve member (29) to exert pressure on an inner machine element (5) surrounded by the inner clamping sleeve member and thereby radially two way and axial interlocking of said machine elements by frictional forces.

6. A device according to claim 5,
wherein each clamping sleeve member (28, 29) has at least one axially extending through slot (30, 31) in order to develop high radial, but low axial force components, when the clamping sleeve members are mutually tightened against said stop means.

7. A device according to claim 5, further comprising:
a lock pin (35) extending between one of the slots (39) of the outer clamping sleeve member (28) and one of the slots (41) of the inner clamping sleeve member (29) to prevent rotation of one of the clamping sleeve members relative to the other clamping sleeve member.

8. A device according to claim 5,
wherein at least one of said sleeve members is provided with a thread having a narrow groove (42) communicating with axially extending pressurized oil inlets located in said at least one sleeve member.

9. A self-contained fastening device acting as a threadless nut on a smooth shaft of circular cross section to axially fix a machine element on said shaft, comprising:
a single piece, integral inner clamping sleeve member (24) having an external conical thread (27) with a sawtooth profile of a relatively small flank angle on one side and a substantially larger flank angle on the other side, and a single piece integral outer clamping sleeve member (26) having an internal thread matching the external thread (27) on the inner clamping sleeve member (24), one sleeve member coaxially encompassing the other,
wherein only said inner sleeve member (24) has a longitudinally extending through slot (25),
and wherein said inner and outer clamping sleeve members are mutually rotatable and adapted to provide,
through mutual rotation thereof, radial contraction of said inner sleeve member (24) to exert pressure on said shaft (23) surrounded by said inner clamping sleeve member (24) to fix said inner clamping sleeve member on said shaft by frictional force and thereby axially fix and exert an axial force on said shaft, said outer clamping sleeve member imposing an axial movement, relative to said first clamping sleeve member, and an axial force to said machine element, and said outer clamping sleeve member (26) overhanging (Δx) said inner clamping sleeve member (24) in the direction of axial movement of said outer sleeve.

10. A device according to claim 9,
wherein, in order to mutually interlock said sleeve members, wrench mounts are formed on the inner clamping sleeve member (29) and outer clamping sleeve member (28), said wrench mounts being adjacent to each other when said sleeve members are coaxially encompassing each other.

11. A device according to claim 10,
wherein said wrench mounts include teeth (28'; 29') with slots (39; 41) extending between the teeth, the number of teeth being different on said two sleeve members (28, 29) to offer a variety of locking opportunities as the sleeves are mutually rotated.

12. A device according to claim 11, further comprising:
a lock pin (35) extending between a slot (39) of the outer clamping sleeve member (28) and a slot (41) of the inner clamping sleeve (29) member to prevent rotation of one of the clamping sleeve members relative to the other clamping sleeve member.

13. A device according to claim 9,
wherein said inner sleeve member has corrugations on its inner face.

14. A self-contained fastening device to be located between machine elements, comprising:
one inner clamping sleeve member (3;29) having an external cylindrical thread with a sawtooth profile of a first relatively small flank angle on one side and a substantially larger flank angle on the other side,
an outer clamping sleeve member (2;28) having an internal thread matching the external thread of the inner clamping sleeve member, one sleeve member coaxially encompassing the other, and
wrench mounts (3';29;2';28') on said inner and outer clamping sleeve menbers,
wherein said inner and outer clamping sleeve members (3;29;2;28) through mutual rotation and prevention of mutual axial motion by stop means provided on at least one of said inner sleeve member (3;29) and said outer sleeve member (2;28), provide radial expansion of said outer sleeve member to exert a pressure against an outer machine element (4) surrounding the outer clamping sleeve member (2;28) and radial contraction of said inner sleeve member (3;29) exert pressure on an inner machine element (5) surrounded by the inner clamping sleeve member and thereby radially two way and axial interlocking of said machine elements by frictional forces.

15. A device according to claim 14,
wherein each clamping sleeve member (28, 29) has at least one axially extending through slot (30, 31) in order to develop high radial, but low axial force components, when the clamping sleeve members are mutually tightened against said stop means.

16. A device according to claim 14,
wherein at least one of said sleeve members is provided with a thread having a narrow groove (42) communicating with axially extending pressurized oil inlets located in said at least one sleeve member.

## Patentansprüche

1. Befestigungsvorrichtung, die zwischen Maschinenelementen anzuordnen ist, mit
einem inneren Kemmbülsenglied (8), das ein äußeres zylindrisches Gewinde mit einem Sägezahnprofil aufweist, das an einer Seite einen ersten relativ kleinen Flankenwinkel und an der anderen Seite einen wesentlich größeren Flankenwinkel hat,
einem äußeren Klemmhülsenglied (7) mit einem Innengewinde, das dern Außengewinde des inneren Klemmhülsengliedes angepaßt ist, wobei ein Hülsenglied das andere koaxial einschließt und
einem zentralen Klemmhülsenglied (6) mit Innen- und Außengewinden, die mit dem Außengewinde des inneren Klemmhülsengliedes (8) bzw. dem Innengewinde des äußeren Klemmhülsengliedes (7) zusammenwirken und welche zwischen dem Außengewinde des inneren Klemmhülsengliedes und dem Innengewinde des äußeren Klemmhülsengliedes vorgeseben sind,
wobei das innere und das äußere Klemmhülsenglied (8, 7) durch gegenseitiges Rotieren und Verbinderung einer gegenseitigen Axialbewegung durch eine Halteeinrichtung, welche als doppelte Halteeinrichtung (6') an dem mittleren Klemmhülsenglied (6) vorgesehen ist, ein radiales Ausdehnen des äußeren Hülsengliedes (7), um einen Druck gegen ein äußeres Maschinenelement (4) auszuüben, welches das äußere Klemmhülsenglied umgibt, und eine radiale Kontraktion des inneren Hülsengliedes (8) schaffen, um einen Druck auf ein inneres Maschinenelement (5) auszuüben, welches von dem inneren Klemmhühenglied umgeben ist und somit ein radial zweifaches und ein axiales Verriegeln der Maschinenelemente durch Reibungskräfte schaffen.

2. Vorrichtung nach Anspruch 1, wobei jedes der inneren und äußeren Hülsenglieder (8, 7) wenigstens einen sich axial erstreckenden Durchgangsschlitz (21) aufweist.

3. Vorrichtung nach Anspruch 2, wobei Schlüsselfassungen (8'; 7') an dem inneren Klemmhülsenglied (8) und dem äußeren Klemmhülsenglied (7) ausgebildet sind, die nebeneinander angeordnet sind, wenn die Hülsenglieder mit der zentralen Klemmhülse (6) zusammenwirken und eine Schlüsselfassung (6') an der mittleren Klemmhülse (6) ausgebildet ist, die sich in einem Abstand von den Schlüsselfassungen (8'; 7') der inneren und äußeren Klemmhülse erstreckt, welche annähernd dem axialen Ausmaß der Gewinde der entsprechenden inneren und äußeren Klemmhülsenglieder entspricht. (entsprechenden/entspricht)??

4. Vorrichtung nach Anspruch 1, wobei Schlüsselfassungen an dem inneren Klemmhülsenglied (29) und äußeren Klemmhülsenglied (28) in der Form von Zäbnen (29'; 28') mit sich zwischen den Zähnen erstreckenden Schlitzen (39, 41) ausgebildet sind, welche nebeneinander liegen, wenn die Hülsenglieder zusammenwirken.

5. Befestigungsvorrichtung, die zwischen Maschinenelementen anzuordnen ist, mit
einem inneren Klemmhülsenglied (29), das ein äußeres zylindrisches Gewinde mit einem Sägezahnprofil aufweist, das an einer Seite einen relativ kleinen Flankenwinkel und an der anderen Seite einen wesentlich größeren Flankenwinkel aufweist,
einem äußeren Klemmhülsenglied (28), welches ein Innengewinde aufweist, welches mit dem Außengewinde des inneren Klemmhülsengliedes zusammenpaßt, wobei ein Hülsenglied das andere Koaxial umgibt, und mit
Schlüsselfassungen an dem inneren und äußeren Klemmhülsenglied (29; 28), welche Zähne (28'; 29') mit zwischen den Zähnen sich erstreckenden Schlitzen (39; 41) einschließen,
wobei die Schlüsselfassungen der inneren und äußeren Klemmhülsenglieder (29; 28) auf der gleichen Seite der Vorrichtung vorgesehen sind und
wobei die inneren und äußeren Klemmhülsenglieder (29; 28) durch gegenseitige Rotation und Verhinderung einer gegenseitigen Axialbewegung durch eine Halteeinrichtung, welche an wenigstens einem des inneren Hülsengliedes (29) und des äußeren Hülsengliedes (28) vorgesehen sind, eine radiale Expansion des äußeren Hülsengliedes, um einen Druck gegen ein äußeres Maschinenelement (4) auszuüben, welches das äußere Klemmhülsenglied (28) umgibt und eine radiale Kontraktion des inneren Hülsengliedes (29), um einen Druck auf ein inneres Maschinenelement (5) auszuüben, welches von dem inneren Klemmhülsenglied umgeben ist und somit radial zweifach und axial die Maschinenelemente durch Reibungskräfte verriegeln.

6. Vorrichtung nach Anspruch 5, wobei jedes Klemmhülsenglied (28, 29) wenigstens einen sich axial erstreckenden Durchgangsschlitz (30, 31) zum Entwickeln hoher radialer, jedoch niedriger Axialkraftkomponenten aufweist, wenn die Klemmhülsenglieder gegenseitig gegen die Halteeinrichtung angezogen sind.

7. Vorrichtung nach Anspruch 5, wobei ein Verriegelungsstift (35) sich zwischen einem der Schlitze (39) des äußeren Klemmhülsengliedes (28) und einem der Schlitze (41) des innerer Klemmhülsengliedes (29) erstreckt, um eine Rotation eines der Klemmhülsenglieder in bezug auf das andere Klemmhülsenglied zu verhindern.

8. Vorrichtung nach Anspruch 5, wobei wenigstens eines der Hülsenglieder mit einem Gewinde mit einer schmalen Ausnehmung (42) versehen ist, die mit sich axial erstreckenden Drucköleinlässen in Verbindung steht, die in wenigstens einem Hülsenglied angeordnet sind.

9. Befestigungsvorrichtung, welche als gewindefreie Mutter auf einer glatten Welle kreisförmigen Querschnittes wirkt, um ein Maschinenelement axial an der Welle zu fixieren, mit
einem einstückigen, inneren Klemmhülsenglied (24), das ein äußeres konisches Gewinde (27) aufweist, das ein Segelprofil mit einem relativ kleinen Flankenwinkel an einer Seite und einem wesentlich größeren Flankenwinkel an der anderen Seite aufweist und einem einstückigen integralen äußeren Klemmhülsenglied (26) mit einem Innengewinde, welches mit dem Äußengwinde (27) des inneren Klemmhülsengliedes (24) zusammenpaßt, wobei ein Hülsenglied das andere koaxial einschließt,
wobei lediglich das innere Hülsenglied (24) einen sich longitudinal erstreckenden Durchgangsschlitz (25) aufweist und
wobei die inneren und äußeren Klemmhülsenglieder gegenseitig drehbar und angepaßt sind, um durch gegenseitige Rotation eine radiale Kontraktion des inneren Hülsengliedes (24), um einen Druck auf die Welle (23) auszuüben, die von dem, inneren Klemmhülsenglied (24) umgeben ist, um das innere Klemmhülsenglied an der Welle durch Reibungskraft zu fixieren und somit axial zu fixieren??? und eine Axialkraft auf die Welle auszuüben, wobei das äußere Klemmhülsenglied eine Axialbewegung in bezug auf das erste Klemmhülsenglied und eine Axialkraft auf das Maschinenelement ausübt, und wobei das äußere Klemmhülsenglied (26) in der Richtung der Axialbewegung der äußeren Hülse das innere Klemmhülsenglied (24) überlagert. (Δx).

10. Vorrichtung nach Anspruch 9, wobei zum gegenseitigen Verriegeln der Hülsenglieder Schlüsselfassungen an dem inneren Klemmhülsenglied (29) und dem äußeren Klemmhülsenglied (28) ausgebildet sind, wobei die Schlüsselfassungen nebeneinander angeordnet sind, wenn sich die Hülsenglieder koaxial einander umgreifen.

11. Vorrichtung nach Anspruch 10, wobei die Schlüsselfassungen Zähne (28'; 29') mit Schlitzen (39; 41) einschließen, die sich zwischen den Zähnen erstrecken, wobei die Anzahl der Zähne an den beiden Hülsengliedern (28, 29) unterschiedlich sind, um eine Vielzahl von Verriegelungsmöglichkeiten anzubieten, wenn die Hülsen gegeneinander gedreht werden.

12. Vorrichtung nach Anspruch 11, dadurch gekennzeichnet, daß sich ein Verriegelungsstift (25) zwischen einem Schlitz (39) des äußeren Klemmhülsengliedes (28) und einem Schlitz (41) des inneren Klemmhülsengliedes (29) erstreckt, um eine Rotation des einen Klemmhülsengliedes gegenüber dem anderen Klemmhülsenglied zu verhindern.

13. Vorrichtung nach Anspruch 9, dadurch gekennzeichnet, daß das innere Hülsenglied an seiner Innenfläche Rillen aufweist

14. Zwischen Maschinenelementen anzuordnende Befestigungsvorrichtung mit
einem inneren Klemmhülsenglied (3; 29), welches ein äußeres zylindrisches Gewinde mit einem Sägezahnprofïl eines ersten relativ kleinen Flankenwinkels an einer Seite und wesentlich größeren Flankenwinkels an der anderen Seite aufweist,
einem äußeren Klemmhülsenglied (2; 28), welches ein mit dem außengewinde des inneren Klemmhülsengliedes zusammenpassendes Innengewinde aufweist, wobei das eine Hülsenglied das andere koaxial umgibt und mit
Schlüsselfassungen (3'; 29; 2; 2' 28) ?? an den inneren und äußeren Klemmhülsengliedern
wobei die inneren und äußeren Klemmhülsenglieder (3; 29; 2; 28) durch gegenseitiges Drehen und Verhinderung einer gegenseitigen Axialbewegung durch eine Halteeinrichtung, welche an wenigstens einem des inneren Hülsengliedes (3; 29) und des äußeren Hülsengliedes (2; 28) vorgesehen ist, eine radiale Ausdehnung des äußeren Hülsengliedes, um einen Druck gegen ein äußeres Maschinenelement (4) auszuüben, welches das äußere Klemmhülsenglied (2; 28) umgibt und eine radiale Kontraktion des inneren Hülsengliedes (3; 29), um einen Druck auf ein inneres Maschinenelement (5) auszuüben, das von dem inneren Klemmhülsenglied umgeben ist und damit eine radiale Zweiwegeverriegelung und eine axiale Verriegelung der Maschinenelemente durch Reibungskräfte schaffen.

15. Vorrichtung nach Anspruch 14, dadurch gekennzeichnet, daß jedes Klemmhülsenglied (28, 29) wenigstens einen sich axial erstreckenden Durchgangsschlitz (30, 31) aufweist, um hohe Radial-, jedoch geringe AxialKraftkomponenten zu entwickeln, wenn die Klemmhülsenglieder gegenseitig gegen die Halteeinrichtung angezogen sind.

16. Vorrichtung nach Anspruch 14, dadurch gekennzeichnet, daß wenigstens eines der Hülsenglieder mit einem Gewinde versehen ist, welches eine schmale Ausnchmung (42) aufweist, die mit sich radial erstreckenden Drucköleinlässen in Verbindung steht, welche in wenigstens einem Hülsenglied angeordnet sind.

## Revendications

1. Dispositif autonome de fixation destiné à être positionné entre des organes de machine, comprenant :
un élément formant manchon intérieur de serrage (8) possédant un filetage extérieur cylindrique avec un profil en dents de scie ayant un premier angle de flanc relativement faible sur une face et un angle de flanc nettement plus important sur l'autre face,
un élément formant manchon extérieur de serrage (7) possédant un filetage intérieur adapté au filetage extérieur de l'élément formant manchon intérieur de serrage, un élément formant manchon entourant coaxialement l'autre élément formant manchon, et
un élément formant manchon central de serrage (6) possédant un filetage intérieur et un filetage extérieur, qui coopèrent respectivement avec le filetage extérieur de l'élément formant manchon intérieur de serrage (8) et avec le filetage intérieur de l'élément formant manchon extérieur de serrage (7), et prévu entre le filetage extérieur de l'élément formant manchon intérieur de serrage et le filetage intérieur de l'élément formant manchon extérieur de serrage,
dans lequel, sous l'effet d'une rotation réciproque et avec un blocage contre tout déplacement axial réciproque par des moyens de butée prévus sous la forme de moyens de butée doubles (6') sur ledit élément formant manchon central de serrage (6), lesdits éléments formant manchons intérieur et extérieur de serrage (8,7) provoquent une expansion radiale dudit élément formant manchon extérieur (7) de manière qu'il applique une pression contre un organe extérieur de machine (4) entourant l'élément formant manchon extérieur de serrage, et provoquent une contraction radiale dudit élément formant manchon intérieur (8) de manière qu'il applique une pression à un organe intérieur de machine (5) entouré par l'élément formant manchon intérieur de serrage et réalise ainsi un verrouillage radial bidirectionnel et un verrouillage axial desdits organes de machine sous l'effet de forces de frottement.

2. Dispositif selon la revendication 1, dans lequel chacun desdits éléments formant manchons intérieur et extérieur (8,7) possède au moins une fente traversante axiale (21).

3. Dispositif selon la revendication 2, comprenant en outre :
des appuis pour clé (8';7') formés sur l'élément formant manchon intérieur de serrage (8) et sur l'élément formant manchon extérieur de serrage (7), ces appuis étant adjacents lorsque lesdits éléments formant manchons coopèrent avec ledit manchon central de serrage (6), et un appui pour clé (6') formé sur ledit manchon central de serrage (6) et s'étendant, à partir desdits appuis pour clé (8';7') des manchons intérieur et extérieur de serrage, sur une distance correspondant approximativement à l'étendue axiale des filetages des éléments formant manchons intérieur et extérieur respectifs de serrage.

4. Dispositif selon la revendication 1, comprenant en outre :
des appuis pour clé formés sur l'élément formant manchon intérieur de serrage (29) et sur l'élément formant manchon extérieur de serrage (28), sous la forme de dents (29'; 28'), entre lesquelles s'étendent des fentes (39,41), qui sont adjacentes lorsque lesdits éléments formant manchons coopèrent entre eux.

5. Dispositif autonome de fixation destiné à être positionné entre des organes de machine, comprenant :
un élément formant manchon intérieur de serrage (29) possédant un filetage extérieur cylindrique avec un profil en dents de scie ayant un premier angle de flanc relativement faible sur une face et un angle de flanc nettement plus important sur l'autre face,
un élément formant manchon extérieur de serrage (28) possédant un filetage intérieur adapté au filetage extérieur de l'élément formant manchon intérieur de serrage, un élément formant manchon entourant coaxialement l'autre élément formant manchon, et
des appuis pour clé présents sur les éléments formant manchons intérieur et extérieur de serrage (29;28) comprenant des dents (28';29') entre lesquelles s'étendent des fentes (39;41),
dans lequel lesdits appuis pour clé desdits éléments formant manchons intérieur et extérieur de serrage (29; 28) sont prévus sur la même face du dispositif, et
dans lequel, sous l'effet d'une rotation réciproque et avec un blocage contre tout déplacement axial réciproque par des moyens de butée prévus sur ledit élément formant manchon intérieur (29) et/ou sur ledit élément formant manchon extérieur de serrage (28), lesdits éléments formant manchons intérieur et extérieur de serrage (29;28) provoquent une expansion radiale dudit élément formant manchon extérieur de manière qu'il applique une pression contre un organe extérieur de machine (4) entourant l'élément formant manchon extérieur de serrage (28), et provoquent une contraction radiale dudit élément formant manchon intérieur (29) de manière qu'il applique une pression à un organe intérieur de machine (5) entouré par l'élément formant manchon intérieur de serrage et réalise ainsi un verrouillage radial bidirectionnel et un verrouillage axial desdits organes de machine sous l'effet de forces de frottement.

6. Dispositif selon la revendication 5, dans lequel chaque élément de serrage formant manchon (28, 29) possède au moins une fente traversante axiale (30, 31) servant à développer des composantes radiales intenses de force, mais de faibles composantes axiales de force, lorsque les éléments formant manchons de serrage sont serrés mutuellement contre lesdits moyens de butée.

7. Dispositif selon la revendication 5, comprenant en outre :
une goupille de blocage (35) qui s'étend entre l'une des fentes (39) de l'élément formant manchon extérieur de serrage (28) et l'une des fentes (41) de l'élément formant manchon intérieur de serrage (29) pour empêcher la rotation de l'un des éléments de serrage formant manchons par rapport à l'autre élément de serrage formant manchon.

8. Dispositif selon la revendication 5, dans lequel au moins l'un desdits éléments formant manchons comporte un filetage possédant une gorge étroite (42) communiquant avec des entrées axiales pour une huile sous pression, aménagées dans ledit au moins un élément formant manchon.

9. Dispositif autonome de fixation agissant à la manière d'un écrou non fileté sur un arbre lisse de section transversale circulaire pour fixer axialement un organe de machine sur ledit arbre, comprenant :
un élément formant manchon intérieur moncbloc de serrage (24) possédant un filetage extérieur conique (25) pourvu d'un profil en dents de scie ayant un angle de flanc relativement faible sur une face et un angle de flanc nettement plus grand sur l'autre face, et un élément formant manchon extérieur monobloc de serrage (26) possédant un filetage intérieur adapté au filetage extérieur (27) situé sur l'élément formant manchon intérieur de serrage (24), un élément formant manchon enserrant coaxialement l'autre,
dans lequel seul ledit élément formant manchon extérieur (24) possède une fente longitudinale traversante (25), et
dans lequel lesdits éléments formant manchons intérieur et extérieur de serrage peuvent tourner l'un par rapport à l'autre et sont adaptés pour produire, sous l'effet de leur rotation mutuelle, une contraction radiale dudit élément formant manchon intérieur (24) pour l'application d'une pression audit arbre (23) entouré par ledit élément formant manchon intérieur de serrage (24) afin de fixer ledit élément formant manchon intérieur de serrage sur ledit arbre sous l'effet d'une force de frottement et de ce fait fixer axialement et appliquer une force axiale audit arbre, ledit élément formant manchon extérieur de serrage appliquant un déplacement axial par rapport audit premier élément formant manchon de serrage, et une force axiale audit organe de machine, et ledit élément formant manchon extérieur de serrage (26) étant en débordement (Dx) par rapport audit élément formant manchon intérieur de serrage (24) dans la direction du déplacement axial dudit manchon extérieur.

10. Dispositif selon la revendication 9, dans lequel, pour verrouiller mutuellement lesdits éléments formant manchons, des appuis pour clé sont formés sur l'élément formant manchon intérieur de serrage (29) et sur l'élément formant manchon extérieur de serrage (28), lesdits appuis pour clé étant adjacents l'un à l'autre lorsque l'un desdits manchons entoure l'autre coaxialement.

11. Dispositif selon la revendication 10, dans lequel lesdits appuis pour clé comportent des dents (28';29') avec des fentes (39;41) disposées entre les dents, le nombre de dents étant différent sur lesdits deux éléments formant manchons (28,29) de manière à fournir une variété de possibilités de verrouillage lorsque les manchons tournent l'un par rapport à l'autre.

12. Dispositif selon la revendication 11, comprenant en outre :
une goupille de blocage (35) s'étendant entre une fente (39) de l'élément formant manchon extérieur de serrage (28) et une fente (41) de l'élément formant manchon intérieur de serrage (29) pour empêcher une rotation de l'un des éléments formant manchons de serrage par rapport à l'autre élément formant manchon de serrage.

13. Dispositif selon la revendication 9, dans lequel ledit élément formant manchon intérieur comporte des cannelures sur sa face intérieure.

14. Dispositif autonome de fixation destiné à être positionné entre des organes de machine, comprenant :
un élément formant manchon intérieur de serrage (3;29) possédant un filetage extérieur cylindrique avec un profil en dents de scie ayant un premier angle de flanc relativement faible sur une face et un angle de flanc nettement plus important sur l'autre face,
un élément formant manchon extérieur de serrage (2;28) possédant un filetage intérieur adapté au filetage extérieur de l'élément formant manchon intérieur de serrage, un élément formant manchon entourant coaxialement l'autre élément formant manchon, et
des appuis pour clé (3';29;2';28) situés sur lesdits éléments formant manchons intérieur et extérieur de serrage, dans lequel, sous l'effet d'une rotation réciproque et avec un blocage contre tout déplacement axial réciproque par des moyens de butée prévus sur ledit élément formant manchon intérieur (3;29) et/ou sur ledit élément formant manchon extérieur (2;28), lesdits éléments formant manchons intérieur et extérieur de serrage (3;29;2;28) provoquent une expansion radiale dudit élément formant manchon extérieur (2;28) de manière qu'il applique une pression contre un organe extérieur de machine (4) entourant l'élément formant manchon extérieur de serrage (2;28), et provoquent une contraction radiale dudit élément formant manchon extérieur (3;29) de manière qu'il applique une pression à un organe intérieur de machine (5) entouré par l'élément formant manchon intérieur de serrage et réalise ainsi un verrouillage radial bidirectionnel et un verrouillage axial desdits organes de machine sous l'effet de forces de frottement.

15. Dispositif selon la revendication 14, dans lequel chaque élément de serrage formant manchon (28,29) possède au moins une fente traversante axiale (30, 31) servant à développer des composantes de force radiales intenses, mais de faibles composantes de force axiales, lorsque les éléments de serrage formant manchons sont serrés mutuellement contre lesdits moyens de butée.

16. Dispositif selon la revendication 14, dans lequel au moins l'un desdits éléments formant manchons comporte un filetage possédant une gorge étroite (42) communiquant avec des entrées axiales pour une huile sous pression, aménagées dans ledit au moins un élément formant manchon.
